# EUROPÄISCHE PATENTSCHRIFT

(11) **EP 2 893 483 B1**
(45) Veröffentlichungstag und Bekanntmachung des Hinweises auf die Patenterteilung: **19.09.2018**
(21) Anmeldenummer: 13736909.6
(22) Anmeldetag: 12.07.2013
(51) Int. Cl.: G06F 21/34

(54) **VERFAHREN ZUR PERSONALISIERUNG EINES SECURE ELEMENTS (SE) UND COMPUTERSYSTEM**
METHOD FOR PERSONALIZING A SECURE ELEMENT (SE) AND COMPUTER SYSTEM
PROCÉDÉ DE PERSONNALISATION D'UN ÉLÉMENT SÉCURISÉ (SE) ET SYSTÈME INFORMATIQUE

(30) Priorität: 04.09.2012 DE 102012215630
(43) Veröffentlichungstag der Anmeldung: 15.07.2015
(73) Patentinhaber: Bundesdruckerei GmbH, 10969 Berlin (DE)
(72) Erfinder: SCHRÖDER, Martin, 12437 Berlin (DE); DIETRICH, Frank, 12437 Berlin (DE); KRAUS, Micha, 10827 Berlin (DE); MORGNER, Frank, 12055 Berlin (DE); BASTIAN, Paul, 10243 Berlin (DE)
(74) Vertreter: Richardt Patentanwälte PartG mbB
(86) Internationale Anmeldenummer: PCT/EP2013/064810
(87) Internationale Veröffentlichungsnummer: WO 2014/037136

(56) Entgegenhaltungen:
- EP-B1- 0 730 253
- DE-A1- 3 523 237
- DE-A1-102009 046 205
- Chris Chavez: "No NFC? No Problem! Thanks to SD Cards Equipped With NFC Transmitters", , 1. Juni 2011 (2011-06-01), Seiten 1-4, XP055079659, Gefunden im Internet: URL:http://phandroid.com/2011/06/01/no-nfc -no-problem-thanks-to-sd-cards-equipped-wi th-nfc-transmitters/ [gefunden am 2013-09-17]

## Beschreibung

Die Erfindung betrifft ein Verfahren zur Personalisierung eines Secure Elements (SE) und ein Computersystem.

Der elektronische Personalausweis (ePA) der Bundesrepublik Deutschland beinhaltet die Anwendung "elektronischer Identitätsnachweis (eID)". Diese Anwendung des ePA ermöglicht die verbindliche elektronische Übermittlung von Identitätsmerkmalen, das heißt Attributen des Nutzers und/oder des ePA, in online-Anwendungen. Solche Attribute sind als Personalisierungsinformation in einem sicheren elektronischen Speicher des ePA gespeichert.

Aus DE 10 2008 000 067 B4 ist ein Verfahren zum Lesen von Attributen aus einem ID-Token bekannt, bei dem ein ID-Provider-Computersystem über ein Netzwerk zumindest ein Attribut aus dem ID-Token ausliest, wobei es sich bei dem ID-Token zum Beispiel um ein Ausweisdokument, wie den ePA handeln kann. Aus DE 10 2008 040 416 A1, DE 10 2009 001 959 A1, DE 10 2009 027 676, DE 10 2009 027 681 A1, DE 10 2009 027 682 A1, DE 10 2009 027 686 A1, DE 10 2009 027 723 A1, DE 10 2009 046 205 A1 und DE 10 2010 028 133 A1 sind Weiterbildungen und verschiedene Verwendungen dieses Verfahrens bekannt.

In DE 10 2011 084 728 und DE 10 2011 089 580.9, deren Offenbarungsgehalte vollumfänglich hiermit zum Offenbarungsgehalt der vorliegenden Patentanmeldung gemacht werden, sind Verfahren zum Lesen von Attributen aus einem ID-Token unter Verwendung einer SAML-Request und einer SAML-Response offenbart.

Der elektronische Personalausweis der Bundesrepublik Deutschland (ePA) hat eine Pseudonym-Funktion, die auch als "Restricted Identifier" (RID) bezeichnet wird. Diese Pseudonym-Funktion ermöglicht ein anonymes Login auf Websites. Der ePA erzeugt eine pseudonyme Kartenkennung und übermittelt diese an die Website. Bei jedem weiteren Aufruf der Website wird die gleiche Kartenkennung übermittelt, sodass der Ausweisinhaber "wiedererkannt" wird. Eine Weiterbildung dieser Pseudonym-Funktion ist in DE 10 2012 201 209.5 offenbart, deren Offenbarungsgehalte vollumfänglich hiermit zum Offenbarungsgehalt der vorliegenden Patentanmeldung gemacht wird.

Der Erfindung liegt demgegenüber die Aufgabe zugrunde, ein Verfahren zur Personalisierung eines Secure Elements zu schaffen sowie ein entsprechendes Computersystem.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Unter einem "Secure Element" oder "SE" wird hier ein Security Token oder Sicherheitstoken verstanden, welcher auch als Authentification Token oder Cryptographic Token bezeichnet wird. Hierbei kann es sich zum Beispiel um einen USB-Stick oder eine Chipkarte handeln.

Unter einem "ID-Token" wird hier insbesondere ein Wert- oder Sicherheitsdokument verstanden, das heißt insbesondere ein Ausweisdokument, das heißt ein ID-Dokument, insbesondere ein elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle, verstanden.

Nach Ausführungsformen der Erfindung wird ein Lesezugriff auf in dem ID-Token gespeicherte Personalisierungsinformation durchgeführt, um mit dieser Personalisierungsinformation das Secure Element ebenfalls zu personalisieren. Von besonderem Vorteil ist dabei, dass der ID-Token über eine Kommunikations-Schnittstelle verfügt, die einen ersten Datenübertragungsstandard implementiert, wohingegen das Secure Element eine Kommunikations-Schnittstelle aufweist, welche einen zweiten Datenübertragungsstandard implementiert, welcher mit dem ersten Datenübertragungsstandard nicht kompatibel ist.

Durch die Personalisierung des Secure Element mithilfe des bereits personalisierten ID-Token erhält der Nutzer so ein von dem ID-Token abgeleitetes personalisiertes Secure Element, welches er für elektronische Geräte einsetzen kann, welche eine Kommunikations-Schnittstelle aufweisen, die mit dem zweiten Datenübertragungsstandard, nicht aber mit dem ersten Datenübertragungsstandard kompatibel sind.

Beispielsweise ist der ID-Token eine RFID-Dokument, wohingegen das Secure Element eine NFC-Schnittstelle hat. Die Erfindung ermöglicht es dann, dass ein Nutzer die in dem ID-Token gespeicherte Personalisierungsinformation auch für ein elektronisches Gerät, wie zum Beispiel ein Smartphone, mit NFC Schnittstelle verwenden kann, indem nämlich dieses elektronische Gerät über seine Kommunikations-Schnittstelle nicht mit dem ID-Token, sondern mit dem Secure Element kommuniziert, welches die Personalisierungsinformation aus dem ID-Token beinhaltet.

Nach Ausführungsformen der Erfindung kann dabei wie folgt vorgegangen werden:
Zum Auslesen der Personalisierungsinformation aus dem ID-Token wird ein ID-Provider-Computersystem verwendet, welches über ein Netzwerk die Personalisierungsinformation ausliest. Dies setzt die Authentifizierung des Nutzers und die Authentifizierung des ID-Provider-Computersystems gegenüber dem ID-Token voraus sowie die erfolgreiche Überprüfung der Leseberechtigung des ID-Provider-Computersystems durch den ID-Token anhand eines Zertifikats des ID-Provider-Computersystems.

Die Übertragung der Personalisierungsinformation von dem ID-Token an das ID-Provider-Computersystem erfolgt mit Ende-zu-Ende-Verschlüsselung, wobei die ID-Token-seitige Verschlüsselung durch einen Prozessor des ID-Tokens durchgeführt wird. Die Verbindung des ID-Tokens mit dem Netzwerk erfolgt über ein Lesegerät, das zum Beispiel über ein Nutzer-Computersystem an das Netzwerk angeschlossen ist.

Das Lesegerät hat erste und zweite Kommunikations-Schnittstellen, die den ersten bzw. den zweiten Datenübertragungsstandard implementieren.

Unter einem "ID-Provider-Computersystem" wird hier ein Computersystem verstanden, welches dazu ausgebildet ist, über ein Netzwerk, wie zum Beispiel das Internet, einen Lesezugriff auf einen ID-Token durchzuführen.

Unter einem "Lesegerät" wird hier ein Lesesystem verstanden, welches erste und zweite Kommunikations-Schnittstellen beinhaltet, die entsprechende erste und zweite Datenübertragungsstandards implementieren. Hierzu kann das Lesesystem ein einziges Lesegerät aufweisen, welches beide Datenübertragungsstandards implementiert oder zwei separate Lesegeräte für jeweils einen Datenübertragungsstandard.

Zum Schreiben der Personalisierungsinformation in das Secure Element muss sich der Nutzer gegenüber dem Secure Element authentifizieren, wie zum Beispiel durch Eingabe einer PIN und/oder biometrisch, und ferner muss sich auch das ID-Provider-Computersystem gegenüber dem Secure Element authentifizieren, wobei die Schreibberechtigung des ID-Provider-Computersystems zum Schreiben der Personalisierungsinformation in das Secure Element mithilfe eines Zertifikats des ID-Provider-Computersystems durch das Secure Element geprüft wird. Die Übertragung der Personalisierungsinformation von dem ID-Provider-Computersystem an das Secure Element über das Netzwerk erfolgt mittels Ende-zu-Ende-Verschlüsselung, wobei die Entschlüsselung durch einen Prozessor des Secure Elements vorgenommen wird.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen. Vorzugsweise handelt es sich bei dem Zertifikat um ein Card Verifiable Certificate (CVC).

Ausführungsformen der Erfindung sind besonders vorteilhaft, da mit einem hohen Maß an Sicherheit und geringem apparativem Aufwand ein Nutzer in die Lage versetzt wird, ein Secure Element mit der in seinem ID-Token gespeicherten Personalisierungsinformation zu personalisieren, wobei das Secure Element im Wesentlichen die gleichen Sicherheitsanforderungen erfüllt wie der ID-Token selbst.
Wesentlich ist dabei das ein Zugriff auf einen geschützten Speicherbereich des ID-Tokens bzw. des Secure Elements zum Lesen der Personalisierungsinformation bzw. zum Schreiben der Personalisierungsinformation nicht unmittelbar über die jeweilige Schnittstelle des ID-Tokens bzw. des Secure Elements möglich ist, sondern nur über den jeweiligen Prozessor des ID-Tokens bzw. des Secure Elements, nachdem die hierzu erforderlichen Voraussetzungen erfüllt sind, d.h. die Authentifizierungen und die Prüfung der Berechtigung zum Lesen bzw. Schreiben der Daten, so dass der Prozessor nur dann den entsprechenden Zugriff ermöglicht. Insbesondere schließt das aus, dass ein interner Datenbus den geschützten Speicherbereich des ID-Tokens bzw. des Secure Elements unmittelbar mit der Kommunikations-schnittstelle des ID-Tokens bzw. des Secure Elements verbindet.

Nach einer Ausführungsform der Erfindung hat das Lesegerät eine Nutzerschnittstelle, zum Beispiel mit einem Display und einer Tastatur. Die Nutzerschnittstelle dient zur Ausgabe eines Abfragesignals, um die Eingabe eines Bestätigungssignals von dem Nutzer abzufragen. Dies erfolgt vor dem Schreiben der Personalisierungsinformation in das Secure Element als zusätzliche Sicherheit, zum Beispiel gegen eine sogenannte "man in the middle"-Attacke.

Nach einer Ausführungsform der Erfindung handelt es sich bei der Personalisierungsinformation um ein ID-Token-Pseudonym.

Unter einem "ID-Token-Pseudonym" wird hier ein Pseudonym verstanden, welches einem ID-Token und/oder dessen Nutzer zugeordnet ist, und welches in dem ID-Token zumindest temporär gespeichert wird, um ein Auslesen aus dem ID-Token durch ein hierzu autorisiertes Terminal, insbesondere ein ID-Provider-Computersystem, zu ermöglichen. Insbesondere kann es sich bei dem ID-Token-Pseudonym um einen Identifikator, insbesondere den Restricted Identifier des ePA handeln.

Nach einer Ausführungsform der Erfindung sind als Personalisierungsinformation ein oder mehrere Attribute des Nutzers und/oder des ID-Tokens selbst in dem geschützten Speicherbereich des ID-Tokens gespeichert. Zumindest eines dieser Attribute wird als Personalisierungsinformation aus dem ID-Token von dem ID-Provider-Computersystem ausgelesen, um mithilfe dieses Attributs das Secure Element zu personalisieren.

Nach einer Ausführungsform der Erfindung wird zwischen einem Nutzer-Computersystem des Nutzers und einem Dienst-Computersystem über das Netzwerk eine Verbindung hergestellt, über die von dem Nutzer-Computersystem eine Anforderung zur Personalisierung des Secure Elements an das Dienst-Computersystem übertragen wird. Das Dienst-Computersystem erzeugt daraufhin einen SAML-Request, der die aus dem ID-Token zu lesende Personalisierungsinformation spezifiziert. Für die Durchführung des Schreibzugriffs erzeugt das Dienst-Computersystem anschließend einen weiteren SAML-Request.
Unter einem "Nutzer-Computersystem" wird hier ein Computersystem verstanden, auf welches der Nutzer Zugriff hat. Hierbei kann es sich zum Beispiel um eine Personal Computer (PC), um einen Laptop- oder Tablet-PC handeln.

Das Dienst-Computersystem fungiert dabei also jeweils als SAML-Requester (vgl. Security Assertion Markup Language (SAML) V2.0 Technical Overview, OASIS, Committee Draft 02, 25. März 2008).

Nach einer Ausführungsform der Erfindung wird mit Hilfe der Personalisierungsinformation ein Soft-Token erzeugt.

Unter einem "Soft-Token" werden erfindungsgemäß insbesondere signierte Daten verstanden, welche zur Authentisierung eines Nutzers verwendet werden können, insbesondere ein U-Prove-Token. Insbesondere können die signierten Daten die aus dem ID-Token ausgelesene Personalisierungsinformation beinhalten, welche von einer vertrauenswürdigen Instanz signiert sind. Die Erzeugung des Soft-Tokens kann durch das Dienst-Computersystem erfolgen, welches im Falle der Verwendung des U-Prove-Standards dann als "Issuer" fungiert.

Vorzugsweise wird der U-Prove-Token durch Hardware gesichert, indem der private Schlüssel des U-Prove-Token zwischen zwei Geräten aufgeteilt wird (vgl. hierzu U-Prove-Technology Overview V1.1, Draft Revision 1, Microsoft Corporation 2011, Kapitel 6 auf Seite 18).

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Computersystems,
- Figur 2: ein UML-Diagramm einer Ausführungsform eines erfindungsgemäßen Verfahrens.

Elemente der nachfolgenden Ausführungsformen, die einander entsprechen oder identisch sind, werden jeweils mit den gleichen Bezugszeichen gekennzeichnet.

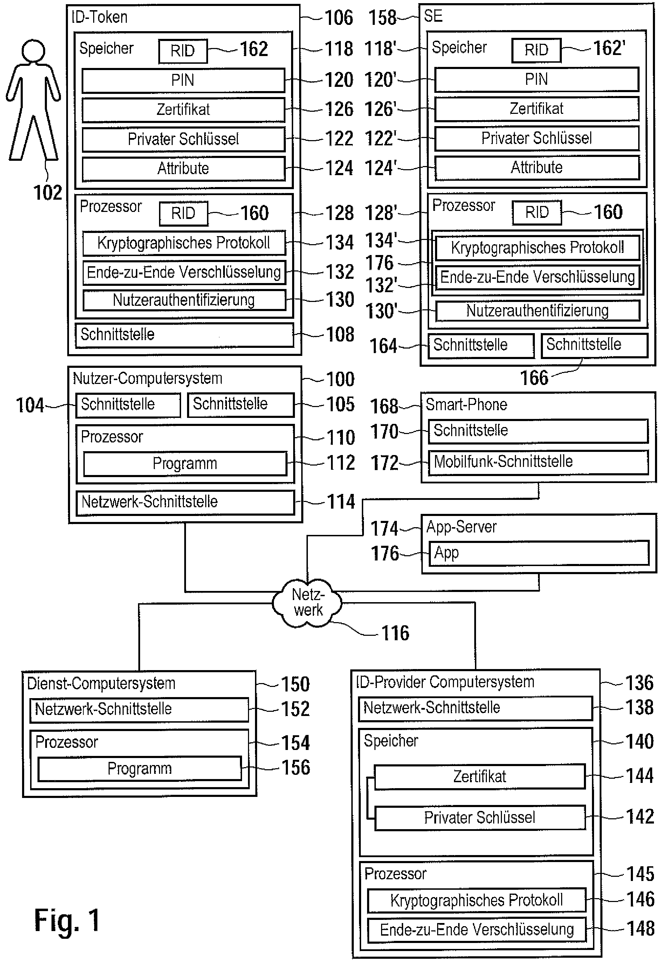

Die Figur 1 zeigt ein Nutzer-Computersystem 100 eines Nutzers 102. Das Nutzer-Computersystem 100 hat ein integriertes Lesegerät mit einer Schnittstelle 104 zur Kommunikation mit einem ID-Token 106, der eine entsprechende Schnittstelle 108 aufweist. Alternativ kann das Lesegerät auch als separates Peripheriegerät ausgebildet sein, dass z.B. an eine USB-Schnittstelle des Nutzer-Computersystems 100 angeschlossen ist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispie! das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine sogenannte Personal identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d. h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptografischen Protokolls zur Authentifizierung eines ID-Provider-Computersystems 136 gegenüber dem ID-Token 106. Bei dem kryptografischen Protokoll kann es sich um ein Challenge-Response-Protokoll basierend auf einem symmetrischen Schlüssel oder einem asymmetrischen Schlüsselpaar handeln.

Beispielsweise wird durch das kryptografische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptografischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d. h. auch der ID-Token 106 muss sich dann gegenüber dem ID-Provider-Computersystem 136 nach demselben oder einem anderen kryptografischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Personalisierungsinformation, wie z.B. von Attributen. Für die Ende-zu-Ende-Verschlüsselung kann ein symmetrischer Schlüssel verwendet werden, der beispielsweise anlässlich der Ausführung des kryptografischen Protokolls zwischen dem ID-Token 106 und dem ID-Provider-Computersystem 136 vereinbart wird.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert sind. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptografischen Protokolls ausgeführt. Insgesamt wird also das kryptografische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung aufseiten des ID-Provider-Computersystems 136, beispielsweise basierend auf dem symmetrischen Schlüssel, der anlässlich der Ausführung des kryptografischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem sogenannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Personalisierungsanforderung ausgebildet sein. Beispielsweise kann der Nutzer 102 online über das Netzwerk 116 eine Personalisierungsanforderung zur Personalisierung eines Secure Element 158 des Nutzers 102 an das Dienst-Computersystem 150 senden.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seine Personalisierungsanforderung eingeben kann.

Der Prozessor 128 des ID-Tokens 106 kann zur Ausführung von Programminstruktionen 160 ausgebildet sein, die zur Erzeugung eines ID-Token-Pseudonyms dienen, beispielsweise einer RID. Die RID kann in einem geschützten Speicherbereich 162 des elektronischen Speichers 118 oder temporär in einem Arbeitsspeicher des Prozessors 128 gespeichert sein.

Wesentlich ist, dass die gegen unerlaubten Zugriffe und Manipulationen zu schützende Personalisierungsinformation des ID-Tokens 106, das heißt die Attribute und gegebenenfalls der RID, so in dem ID-Token 106 gespeichert sind, dass ein externer Zugriff über die Schnittstelle 108 nicht möglich ist, sondern dass nur der Prozessor 128 intern einen lesenden oder schreibenden Zugriff auf die Personalisierungsinformation durchführen kann.

Das Lesegerät des Nutzer-Computersystems 100 hat eine weitere Schnittstelle 105. Während die Schnittstelle 104 einen ersten Datenübertragungsstandard implementiert, wie zum Beispiel einen RFID-Standard, so wird durch die zweite Schnittstelle 105 ein zweiter Datenübertragungsstandard implementiert, wie zum Beispiel ein NFC-Standard. Dies ermöglicht eine Kommunikation des Nutzer-Computersystems 100 mit dem Secure Element 158, welches eine Schnittstelle 164 aufweist, die ebenfalls den zweiten Datenübertragungsstandard, wie zum Beispiel NFC, implementiert.

Das Secure Element 158 kann eine weitere Schnittstelle 166 aufweisen, bei der es sich vorzugsweise um eine kontaktbehaftete Schnittstelle handelt, wohingegen die Schnittstellen 164 und 108 bzw. die Schnittstellen 104 und 105 jeweils vorzugsweise für eine kontaktlose Datenübertragung ausgebildet sind.

Das Secure Element 158 kann als Chipkarte ausgebildet sein, die dazu dient, in einen Chipkarten-Leser eines Mobilfunkgeräts 168, der eine entsprechende kontaktbehaftete Schnittstelle 170 aufweist, eingeschoben zu werden. Insbesondere kann es sich bei dem Secure Element 158 um eine Micro-SD-Karte mit einem integrierten NFC-Chip und einer entsprechenden mit dem NFC-Chip verbundenen NFC-Antenne handeln.

Das Mobilfunkgerät 168 hat eine Mobilfunk-Schnittstelle 172, über die zum Beispiel eine Internetverbindung über das Netzwerk 116 zu einem Application (App)-Server 174 aufgebaut werden kann. Auf dem App-Server 174 befinden sich mehrere Anwendungsprogramme, das heißt sogenannte Apps, von denen eine App 176 in der Figur 1 exemplarisch gezeigt ist.

Der Nutzer 102 kann das Secure Element 158 im Handel erwerben. Das Secure Element 158 befindet sich dann in einem Erstbenutzungszustand, in dem bereits Programminstruktionen 130' für den Übergang von dem Erstbenutzungszustand in einen Benutzt-Zustand und die Nutzerauthentifizierung in dem Secure Element 158 gespeichert sein können sowie optional auch ein privater Schlüssel in dem geschützten Speicherbereich 122' sowie ein Zertifikat in dem Speicherbereich 126' des elektronischen Speichers 118' des Secure Elements 158, welches eine Hardwarearchitektur haben kann, welche prinzipiell analog zu der Architektur des ID-Tokens 106 ist. Der Übergang von dem Erstbenutzungszustand zu dem Benutzt-Zustand kann durch Eingabe einer Transport-PIN, 0-PIN oder Leer-PIN erfolgen, wie es an sich aus dem Stand der Technik bekannt ist, vergleiche zum Beispiel DE 35 23 237 A1, DE 195 07 043 A1, DE 195 07 044 C2, DE 198 50 307 C2, EP 0 730 253 B1, DE 198 50 307 C2, DE 10 2007 008 652 und DE 10 2007 008 651.

Bei diesem Übergang vergibt der Nutzer 102 seine PIN, die in dem geschützten Speicherbereich 120' des Secure Elements 158 gespeichert wird.

Zur Personalisierung des Secure Elements 158 mit einem oder mehreren der Attribute, die in dem geschützten Speicherbereich 124 des ID-Tokens 106 gespeichert sind, und/oder mit dem ID-Token-Pseudonym des ID-Tokens 106, insbesondere der RID, führt der Nutzer 102 das Secure Element 158 in die Schnittstelle 170 des Mobilfunkgeräts 168 ein und stellt über die Mobilfunkschnittstelle 172 eine Verbindung zu dem App-Server 174 her.

Die App 176 wird dann von dem App-Server 174 über das Netzwerk 116 zu dem Mobilfunkgerät 168 übertragen und von dort über die Schnittstelle 170 zu der Schnittstelle 166 des Secure Elements 158, sodass die App auf dem Secure Element 158 zur Ausführung durch den Prozessor 128' des Secure Elements 158' gespeichert wird. Beispielsweise sendet der App-Server 174 die App 176 an eine vertrauenswürdige Instanz (Trusted Service Manager - TSM) die entweder alleine oder in Zusammenarbeit mit dem Herausgeber des Secure Elements die Installation übernimmt.

Die App 176 beinhaltet Programminstruktionen 132' und 134' für die Ende-zu-Ende-Verschlüsselung bzw. zur Durchführung eines kryptografischen Protokolls, welche in ihrer Funktionalität analog zu den entsprechenden Programminstruktionen 132 und 134 des ID-Tokens 106 sind.

Nach dem Übergang von dem Erstbenutzungsstatus in den Benutzt-Status und nach dem Laden der App 176 auf das Secure Element 158 ist dieses nunmehr für die Durchführung der Personalisierung vorbereitet. Hierzu kann nun wie folgt vorgegangen werden:

### a) Auslesen von Personalisierungsinformation aus dem ID-Token 106

### 1. Personalisierungsanforderung

Der Nutzer 102 stellt eine Verbindung zwischen seinem Nutzer-Computersystem 100 und dem Dienst-Computersystem 150 über das Netzwerk 116 her, indem er beispielsweise einen von den Programminstruktionen 116 implementierten Internetbrowser startet und die URL einer Webseite des Dienst-Computersystems 150 eingibt; hierdurch wird eine Internet Session gestartet. In diese Webseite gibt der Nutzer 102 dann über das Nutzer-Computersystem 100 eine Personalisierungsanforderung zur Personalisierung des Secure Elements 158 ein. Diese Personalisierungsanforderung wird von dem Dienst-Computersystem 150 über das Netzwerk 116 entweder unmittelbar oder über das Nutzer-Computersystem 100 an das ID-Provider-Computersystem 136 weitergeleitet.

### 2. Authentifizierung des Nutzers 102 gegenüber dem ID-Token 106.

Der Nutzer 102 bringt den ID-Token 106 in die Reichweite der Schnittstelle 104 des Lesegeräts und authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.

### 3. Authentifizierung des ID-Provider-Computersystems 136 gegenüber dem ID-Token 106.

Hierzu wird eine Verbindung zwischen dem ID-Token 106 und dem ID-Provider-Computersystem 136 über das Nutzer-Computersystem 100, insbesondere die Schnittstelle 104, und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine sogenannte Challenge generiert, d. h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mithilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d. h.. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.

Vorzugsweise ist die Authentifzierung gegenseitig, d.h. auch der ID-Token 106 authentifiziert sich gegenüber dem ID-Provider-Computersystems 136, beispielsweise mittels dem privaten Schlüssel 122.

### 4. Prüfung Leseberechtigung und Lesezugriff

Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, prüft der ID-Token 106 anhand des Zertifikats 144, ob das ID-Provider-Computersystem 136 die zum Lesen der Personalisierungsinformation erforderlichen Leserechte hat. Wenn dies der Fall ist, wird die angeforderte Personalisierungsinformation von dem Prozessor 128 aus dem geschützten Speicherbereich 124 ausgelesen und durch Ausführung der Programminstruktionen 132 verschlüsselt. Die verschlüsselte Personalisierungsinformation wird über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Personalisierungsinformation. Das ID-Provider-Computersystem 136 kann die Personalisierungsinformation signieren und vorzugsweise verschlüsselt an das Dienst-Computersystem 150 übertragen.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

### b) Schreiben der Personalisierungsinformation in das Secure Element 158

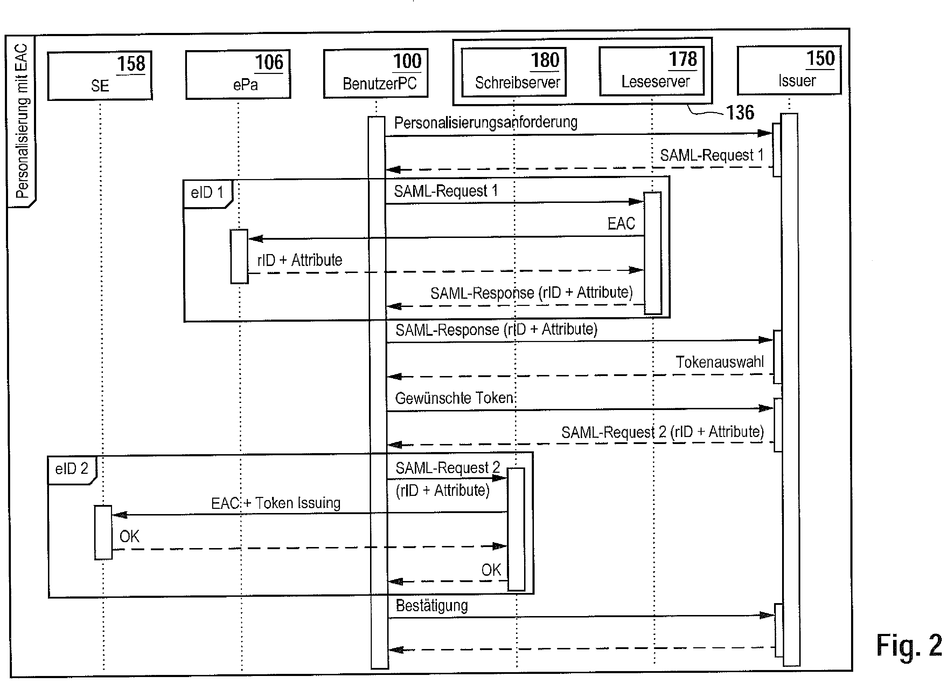

1. Das ID-Provider-Computersystem 136 generiert eine Anforderung, die über das Netzwerk 116 an das Nutzer-Computersystem 100 übertragen wird, um den Nutzer 102 dazu aufzufordern, das Secure Element 158 in die Reichweite der Schnittstelle 105 zu bringen.
   Alternativ fordert das Dienst-Computersystem 150 den Nutzer 102 dazu auf, das Secure Element 158 in die Reichweite der Schnittstelle 105 zu bringen; dies kann über die Internet Session erfolgen. Ferner generiert das Dienst-Computersystem 150 eine Anfrage an das ID-Provider-Computersystem 136 zum Schreiben der Personalisierungsinformation, wobei diese Anfrage die Personalisierungsinformation beinhaltet, beispielsweise also die ,RID und/oder andere Attribute. Ferner kann diese Anfrage die Anzahl der zu generierenden Token, insbesondere U-Prove Token, spezifizieren..
   Die nachfolgenden Schritte 2 - 4 zum Schreiben der Personalisierungsinformation in das Secure Element 158 werden analog zu den oben dargestellten Schritten 2 - 4 zum Lesen der Personalisierungsinformation aus dem ID-Token 106 durchgeführt:
2. Authentifizierung des Nutzers 102 gegenüber dem Secure Element 158.
   Der Nutzer 102 bringt das Secure Element 158 in die Reichweite der Schnittstelle 105 des Lesegeräts und authentifiziert sich gegenüber dem Secure Element 158. Bei einer Implementierung mit PIN gibt der Nutzer 102 hierzu seine PIN für das Secure Element 158, beispielsweise über das Nutzer-Computersystem 100 oder einen daran angeschlossenen Chipkarten-Terminal ein. Durch Ausführung der Programminstruktionen 130' prüft dann der Secure Element 158 die Korrektheit der eingegebenen PIN. Wenn die eingegebene PIN mit dem in dem geschützten Speicherbereich 120' gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
3. Authentifizierung des ID-Provider-Computersystems 136 gegenüber dem Secure Element 158.
   Hierzu wird eine Verbindung zwischen dem Secure Element 158 und dem ID-Provider-Computersystem 136 über das Nutzer-Computersystem 100, insbesondere die Schnittstelle 105, und das Netzwerk 116 hergestellt. Beispielsweise überträgt das ID-Provider-Computersystem 136 sein Zertifikat 144 über diese Verbindung an den Secure Element 158. Durch die Programminstruktionen 134' wird dann eine sogenannte Challenge generiert, d. h.. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem Secure Element 158 über die Verbindung an das ID-Provider-Computersystem 136 gesendet. Das ID-Provider-Computersystem 136 entschlüsselt das Chiffrat mithilfe seines privaten Schlüssels 142 und erhält so die Zufallszahl. Die Zufallszahl sendet das ID-Provider-Computersystem 136 über die Verbindung an den Secure Element 158 zurück. Durch Ausführung der Programminstruktionen 134' wird dort geprüft, ob die von dem ID-Provider-Computersystem 136 empfangene Zufallszahl mit der ursprünglich generierten Zufallszahl, d. h.. der Challenge, übereinstimmt. Ist dies der Fall, so gilt das ID-Provider-Computersystem 136 als gegenüber dem Secure Element 158 authentifiziert. Die Zufallszahl kann als symmetrischer Schlüssel für die Ende-zu-Ende Verschlüsselung verwendet werden.
   Vorzugsweise ist die Authentifizierung gegenseitig, d.h. auch das Secure Element 158 authentifiziert sich gegenüber dem ID-Provider-Computersystem 136. Hierdurch wird sicher gestellt wird, dass die Personalisierungsinformation auch tatsächlich in einem Secure Element gespeichert wird. Für die Authentifizierung des Secure Element 158 kann ebenfalls ein Challenge-Response-Verfahren zum Einsatz kommen, wobei das Secure Element 158 den privaten Schlüssel 122' verwendet, welcher symmetrisch oder asymmetrisch sein kann.
4. Prüfung Schreibberechtigung und Schreibzugriff
   Nachdem sich der Nutzer 102 erfolgreich gegenüber dem Secure Element 158 authentifiziert hat, und nachdem sich das ID-Provider-Computersystem 136 erfolgreich gegenüber dem Secure Element 158 authentifiziert hat, prüft der Secure Element 158 anhand des Zertifikats 144, ob das ID-Provider-Computersystem 136 die zum Schreiben der Personalisierungsinformation erforderlichen Schreibberechtigung hat. Wenn dies der Fall ist, wird die Personalisierungsinformation von dem Prozessor 145 durch Ausführung der Programminstruktionen 148 verschlüsselt und die verschlüsselte Personalisierungsinformation wird von dem ID-Provider-Computersystem 136 über das Netzwerk an das Secure Element 158 übertragen und dort durch Ausführung der Programminstruktionen 132' entschlüsselt. Der Prozessor 128' schreibt dann die Personalisierungsinformation in den geschützten Speicherbereich 124', wenn es sich um ein oder mehrere Attribute handelt, oder in den geschützten Speicherbereich 162', wenn es sich um den RID handelt.
   Das Zertifikat 144 beinhaltet also eine Angabe, dass das ID-Provider-Computersystem 136 zum Lesen und Schreiben von Personalisierungsinformation berechtigt ist. Dabei kann auch spezifiziert sein, auf welche der Personalisierungsinformationen, also etwa die RID und/oder auf welche der Attribute sich diese Lese- und Schreibberechtigung bezieht. Die Lese- und Schreibberechtigungen können auch in zwei unterschiedlichen Zertifikaten des ID-Provider-Computersystems 136 angegeben werden, die dann für den Lese- bzw. Schreibzugriff gegenüber dem ID-Token 106 bzw. dem Secure Element 158 verwendet werden. Ferner ist es auch möglich, dass das ID-Provider-Computersystem 136 separate Lese- und Schreibserver für die Durchführung des Lese- bzw. des Schreibzugriffs beinhaltet (vergleiche hierzu die Ausführungsform gemäß Figur 2).

Der Nutzer 102 erhält auf diese Art und Weise in Form des personalisierten Secure Elements 158 einen personalisierten Sicherheitstoken, der von dem ID-Token 106 abgeleitet ist, und der im Wesentlichen dasselbe Maß an Vertrauenswürdigkeit und Sicherheit aufweist wie der ID-Token 106. Von besonderem Vorteil ist nun, dass der Nutzer 102 das Secure Element 158 mit dem Mobilfunkgerät 168 verwenden kann, dessen Schnittstelle 170 nicht mit der Schnittstelle 108 des ID-Tokens 106 kompatibel ist. Von besonderem Vorteil ist dabei ferner, dass es sich bei dem Mobilfunkgerät 158 nicht um ein NFC-fähiges Smartphone handeln muss, sondern auch um ein Mobilfunkgerät älterer Bauart.

Insbesondere kann die Personalisierungsinformation, die in das Secure Element 158 geschrieben worden ist, für die Erzeugung eines U-Prove|_{[SM1]}-Tokens verwendet werden, wobei das Dienst-Computersystem 150 die Rolle des "Issuers" gemäß dem U-Prove-Protokoll übernehmen kann.

Die Figur 2 zeigt eine Ausführungsform eines erfindungsgemäßen Verfahrens anhand eines UML-Diagramms, wobei in dieser Ausführungsform das U-Prove-Protokoll und SAML verwendet werden. Bei dieser Ausführungsform beinhaltet das ID-Provider-Computersystem 136 einen Leseserver 178 zur Durchführung des Lesevorgangs der Personalisierungsinformation sowie einen Schreibserver 180 zur Durchführung des Schreibvorgangs der Personalisierungsinformation in das Secure Element 158. Die Lese- und Schreibserver 178, 180 können als getrennte Hardwareeinheiten oder auf logischer Ebene in dem ID-Provider-Computersystem 136 implementiert sein.

Zur Personalisierung des Secure Elements 158 wird zunächst eine Personalisierungsanforderung von dem Nutzer-Computersystem 100 über das Netzwerk 116 an das Dienst-Computersystem 150 gesendet, welches hier die Rolle des Issuer gemäß dem U-Prove-Protokoll hat. Das Dienst-Computersystem 150 antwortet auf diese Personalisierungsanforderung mit der Erzeugung eines ersten SAML-Request, das heißt dem SAML-Request 1, welcher die Personalisierungsanforderung beinhaltet.

Dieser SAML-Request 1 wird von dem Dienst-Computersystem 150 an das Nutzer-Computersystem 100 gesendet und von dort über das Netzwerk 116 an den Leseserver 178 weitergeleitet. Daraufhin authentifizieren sich der Nutzer 102 und der Leseserver 178 gegenüber dem ID-Token 106 und der ID-Token 106 überprüft die Leseberechtigung des Leseservers 178 anhand von dessen Zertifikat, beispielsweise nach dem Extended Access Control Protocol.

Wenn die Authentifizierungen erfolgreich sind, und die erforderliche Leseberechtigung vorliegt, so liest der Leseserver 178 die Personalisierungsinformation, das heißt zum Beispiel die RID sowie weitere Attribute, und erzeugt eine SAML-Response, die diese Personalisierungsinformation beinhaltet. Diese SAML-Response sendet der Leseserver 178 an das Nutzer-Computersystem 100, von wo aus die SAML-Response an das Dienst-Computersystem 150 weitergeleitet wird.

Das Dienst-Computersystem 150, d.h. der Issuer, erzeugt daraufhin ein Signal, um den Nutzer 102 zu einer Tokenauswahl aufzufordern, wobei dieses Signal über das Netzwerk 116 von dem Dienst-Computersystem 150 an das Nutzer-Computersystem 100 übertragen wird.

Der Nutzer 102 bringt dann das Secure Element 158 in die Reichweite der Schnittstelle 105 und gibt eine entsprechende Auswahl des gewünschten Tokens ein, welche wiederum über das Netzwerk 116 dem Dienst-Computersystem 150 signalisiert wird. Der Nutzer kann als Antwort auf das Signal auch die Attribute spezifizieren, die in den Softtoken eingehen sollen, sowie auch die gewünschte Anzahl von Token, da jeder Token nur für einmalige Benutzung vorgesehen ist, Letzteres gemäß U-Prove Protokoll.

Das Dienst-Computersystem 150 erzeugt dann einen weiteren SAML-Request, das heißt den SAML-Request 2, der die Personalisierungsinformation beinhaltet sowie optional die Anzahl der von dem Nutzer gewünschten U-Prove Token. Der SAML-Request 2 wird dann von dem Dienst-Computersystem 150 an das Nutzer-Computersystem 100 über das Netzwerk 116 übertragen und von dort an den Schreibserver 180 weitergeleitet.

Daraufhin muss sich der Nutzer 102 gegenüber dem Secure Element 158 authentifizieren sowie auch der Schreibserver 180. Das Secure Element 158 prüft mithilfe des Zertifikats des Schreibservers 180, ob dieser eine Schreibberechtigung hat. Dies kann zum Beispiel im Rahmen der Durchführung eines Extended Access Control Protocols durchgeführt werden. Wenn die Authentifizierungen erfolgreich sind und die Schreibberechtigung vorliegt, so schreibt der Schreibserver 180 den U-Prove-Token mit der Personalisierungsinformation in das Secure Element 158 und erzeugt anschließend ein Bestätigungssignal "OK", welches über das Nutzer-Computersystem 100 an das Dienst-Computersystem 150 weitergeleitet wird, um den Personalisierungsvorgang hiermit abzuschließen.

Vorzugsweise hat das Lesegerät des Nutzer-Computersystems 100 eine Nutzerschnittstelle, zum Beispiel mit einem Display und einer Tastatur. Das Lesegerät ist so ausgebildet, dass es vor der Durchführung des Schreibvorgangs ein Abfragesignal generiert, welches auf dem Display angezeigt wird. Erst nachdem der Nutzer 102 eine Bestätigung, zum Beispiel über die Tastatur des Lesegeräts eingegeben hat, wird der Schreibvorgang tatsächlich durchgeführt. Zur Bestätigung kann der Nutzer z.B. eine PIN eingeben. Hierdurch ist eine zusätzliche Sicherheit, zum Beispiel gegen einen Man-in-the-middle-Angriff, gegeben, für den Fall etwa, dass die zwischen dem Nutzer-Computersystem 100 und dem Dienst-Computersystem 150 aufgebaute Internetsession auf den Computer eines Dritten übertragen worden ist.

Die Erzeugung des oder der U-Prove Token führt das ID-Provider-Computersystem zusammen mit dem Secure Element 158 durch und zwar gemäß dem U-Prove Protokoll.

### Bezugszeichenliste

- 100: Nutzer-Computersystem
- 102: Nutzer
- 104: Schnittstelle
- 105: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 118': elektronischer Speicher
- 120: geschützter Speicherbereich
- 120': geschützter Speicherbereich
- 122: geschützter Speicherbereich
- 122': geschützter Speicherbereich
- 124: geschützter Speicherbereich
- 124': geschützter Speicherbereich
- 126: Speicherbereich
- 126': Speicherbereich
- 128: Prozessor
- 128': Prozessor
- 130: Programminstruktionen
- 130': Programminstruktionen
- 132: Programminstruktionen
- 132': Programminstruktionen
- 134: Programminstruktionen
- 134': Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Program minstruktionen
- 148: Programminstruktionen
- 150: Dienst-Computersystem
- 152: Netzwerk-Schnittstelle
- 154: Prozessor
- 156: Programminstruktionen
- 158: Secure Element
- 160: Programminstruktionen
- 160': Programminstruktionen
- 164: Schnittstelle
- 166: Schnittstelle
- 168: Mobilfunkgerät
- 170: Schnittstelle
- 172: Mobilfunkschnittstelle
- 174: App-Server
- 176: App
- 178: Leseserver
- 180: Schreibserver

## Patentansprüche

1. Verfahren zur Personalisierung eines Secure Element (158) mithilfe eines ID-Tokens (106), wobei der ID-Token einen elektronischen Speicher (118) mit einem geschützten Speicherbereich (124, 162) aufweist, in dem eine Personalisierungsinformation gespeichert ist, wobei ein Zugriff auf den geschützten Speicherbereich nur über einen Prozessor (128) des ID-Tokens möglich ist, und wobei der ID-Token eine Kommunikations-Schnittstelle (108) zur Kommunikation mit einem Lesegerät nach einem ersten Datenübertragungsstandard aufweist, wobei das Secure Element einen elektronischen Speicher (118') mit einem geschützten Speicherbereich (124', 162') aufweist, wobei ein Zugriff auf den geschützten Speicherbereich nur über einen Prozessor (128') des Secure Elements möglich ist, und wobei das Secure Element eine Kommunikations-Schnittstelle (164) zur Kommunikation mit dem Lesegerät nach einem zweiten Datenübertragungsstandard aufweist, mit folgenden Schritten:
a) Auslesen der Personalisierungsinformation aus dem ID-Token durch ein ID-Provider-Computersystem (136) über ein Netzwerk (116), wobei für das Auslesen die folgenden Schritte durchgeführt werden:
- Authentifizierung eines Nutzers (102), dem der ID-Token zugeordnet ist, gegenüber dem ID-Token,
- Authentifizierung des ID-Provider-Computersystems gegenüber dem ID-Token über das Netzwerk, wobei die Authentifizierung des ID-Provider-Computersystems gegenüber dem ID-Token mithilfe eines Zertifikats (144) des ID-Provider-Computersystems erfolgt, indem eine Leseberechtigung für einen Lesezugriff des ID-Provider-Computersystems auf die in dem geschützten Speicherbereich des ID-Tokens gespeicherte Personalisierungsinformation gespeichert ist, wobei der ID-Token die Leseberechtigung des ID-Provider-Computersystems für den Lesezugriff auf die Personalisierungsinformation mithilfe des Zertifikats überprüft,
- nach erfolgreicher Authentifizierung des Nutzers und des ID-Provider-Computersystems gegenüber dem ID-Token und nach erfolgreicher Überprüfung der Leseberechtigung, Durchführung des Lesezugriffs des ID-Provider-Computersystems auf die in dem ID-Token gespeicherte Personalisierungsinformation über das Netzwerk, wobei die Übertragung der Personalisierungsinformation von dem ID-Token zu dem ID-Provider-Computersystem über das Netzwerk mit Ende-zu-Ende-Verschlüsselung erfolgt, wobei die ID-Token-seitige Verschlüsselung (132) durch den Prozessor des ID-Tokens durchgeführt wird,
wobei der ID-Token über das Lesegerät, welches die ersten und zweiten Datenübertragungsstandards implementiert, an das Netzwerk angebunden ist,
b) Schreiben der aus dem ID-Token ausgelesenen Personalisierungsinformation über das Netzwerk in das Secure Element durch das ID-Provider-Computersystem, wobei für das Schreiben der Personalisierungsinformation die folgenden Schritte durchgeführt werden:
- Authentifizierung des Nutzers gegenüber demNutzer zugeordneten Secure Element,
- Authentifizierung des ID-Provider-Computersystems gegenüber dem Secure Element über das Netzwerk, wobei die Authentifizierung des ID-Provider-Computersystems gegenüber dem Secure Element mithilfe eines Zertifikats (144) des ID-Provider-Computersystems erfolgt, indem eine Schreibberechtigung für einen Schreibzugriff des ID-Provider-Computersystems auf den geschützten Speicherbereich des Secure Element zur Speicherung der Personalisierungsinformation gespeichert ist, wobei das Secure Element die Schreibberechtigung des ID-Provider-Computersystems für den Schreibzugriff mithilfe des Zertifikats überprüft,
- nach erfolgreicher Authentifizierung des Nutzers und des ID-Provider-Computersystems gegenüber dem ID-Token und nach erfolgreicher Überprüfung der Schreibberechtigung durch das Secure Element, Durchführung des Schreibzugriffs des ID-Provider-Computersystems zum Schreiben der Personalisierungsinformation in den geschützten Speicherbereich des Secure Element über das Netzwerk, wobei die Personalisierungsinformation von dem ID-Provider-Computersystem über das Netzwerk mit Ende-zu-Ende-Verschlüsselung an das Secure Element übertragen wird, wobei die Secure Element-seitige Verschlüsselung (132') durch den Prozessor des Secure Element durchgeführt wird,
wobei das Secure Element über das Lesegerät an das Netzwerk angebunden ist.

2. Verfahren nach Anspruch 1, wobei das Lesegerät eine Nutzerschnittstelle aufweist, und das Lesegerät zur Ausgabe eines Abfragesignals über die Nutzerschnittstelle sowie zur Eingabe eines Bestätigungssignals auf das Abfragesignal hin durch den Nutzer ausgebildet ist, wobei das Abfragesignal zur Authentifizierung des Nutzers und des ID-Provider-Computersystems sowie der erfolgreichen Prüfung der Schreibberechtigung von dem Lesegerät generiert und über die Nutzerschnittstelle ausgegeben wird, wobei die Eingabe des Bestätigungssignals eine Voraussetzung für die anschließende Durchführung des Schreibzugriffs durch das ID-Provider-Computersystem ist, wobei die Eingabe des Bestätigungssignals vorzugsweise durch Eingabe einer PIN des Nutzers erfolgt, wodurch der Nutzer authentifiziert wird.

3. Verfahren nach Anspruch 1 oder 2, wobei es sich bei der Personalisierungsinformation um ein ID-Token-Pseudonym, insbesondere einen Restricted Identifier (RID) handelt.

4. Verfahren nach Anspruch 1, 2 oder 3, wobei die Personalisierungsinformation ein oder mehrere Attribute des Nutzers und/oder des ID-Tokens beinhaltet.

5. Verfahren nach einem der vorhergehenden Ansprüche, wobei das ID-Provider-Computersystem einen Leseserver (178) zur Durchführung des Lesezugriffs und einen Schreibserver (180) zur Durchführung des Schreibzugriffs aufweist, wobei der Leseserver ein erstes Zertifikat hat, in dem die Leseberechtigung spezifiziert ist, und wobei der Schreibserver ein zweites Zertifikat hat, in dem die Schreibberechtigung spezifiziert ist.

6. Verfahren nach Anspruch 5, wobei die von dem Leseserver aus dem ID-Token gelesene Personalisierungsinformation von dem Leseserver signiert und an ein Dienst-Computersystem (150) über das Netzwerk übertragen wird, , und die Personalisierungsinformation von dem Dienst-Computersystem über das Netzwerk an den Schreibserver übertragen wird, welcher den Schreibzugriff durchführt, um die Personalisierungsinformation in das Secure Element zu schreiben.

7. Verfahren nach Anspruch 6, wobei eine Netzwerkverbindung zwischen einem Nutzer-Computersystem und dem Dienst-Computersystem hergestellt wird, über die eine Personalisierungsanforderung zur Personalisierung des Secure Elements an das Dienst-Computersystem übertragen wird, woraufhin das Dienst-Computersystem einen ersten SAML-Request erzeugt, in dem die auszulesende Personalisierungsinformation spezifiziert ist, und das Dienst-Computersystem den ersten SAML-Request über das Netzwerk an den Leseserver überträgt, wobei der Leseserver die daraufhin ausgelesene Personalisierungsinformation in Form eines SAML-Objekts an das Dienst-Computersystem überträgt, woraufhin das Dienst-Computersystem einen zweiten SAML-Request generiert, der die ausgelesene Personalisierungsinformation, beinhaltet, um den nachfolgenden Schreibzugriff des Schreibservers zu spezifizieren, wobei der zweite SAML-Request von dem Dienst-Computersystem über das Netzwerk an den Schreibserver übertragen wird.

8. Verfahren nach Anspruch 7, wobei das Dienst-Computersystem nach dem Empfang des SAML-Objekts über das Netzwerk ein Aufforderungssignal an das Nutzer-Computersystem überträgt, um den Nutzer dazu aufzufordern, das Secure Element in die Reichweite des Lesegeräts zu bringen.

9. Verfahren nach einem der vorhergehenden Ansprüche, wobei es sich bei dem ID-Token um ein Wert- oder Sicherheitsdokument handelt, insbesondere ein Ausweisdokument, das heißt ein ID-Dokument, insbesondere ein elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

10. Verfahren nach einem der vorhergehenden Ansprüche, wobei es sich bei dem Secure Element um eine Micro-SD-Karte mit integrierter NFC-Antenne handelt.

11. Verfahren nach einem der vorhergehenden Ansprüche, wobei das Secure Element vor der Personalisierung von einem Erstbenutzungsstatus in einen Benutzt-Status überführt wird, um die Authentifizierung des Nutzers gegenüber dem Secure Element als Voraussetzung für den Schreibzugriff zu ermöglichen.

12. Verfahren nach einem der vorhergehenden Ansprüche, wobei die Ende-zu-Ende-Verschlüsselung (132') durch Ausführung eines Anwendungsprogramms (176) durch den Prozessor des Secure Elements durchgeführt wird, wobei das Anwendungsprogramm vor der Durchführung der Personalisierung mithilfe eines Mobilfunkgeräts (168) über das Netzwerk von einem Applicationserver (174) geladen wird, wobei das Mobilfunkgerät eine Kommunikations-Schnittstelle (170) zur Kommunikation über eine Kommunikationsschnittstelle (166) des Secure Element aufweist.

13. Computersystem mit einem ID-Provider-Computersystem (136), einem Lesegerät mit Kommunikations-Schnittstellen (104, 105) zur Kommunikation nach einem ersten bzw. einem zweiten Datenübertragungsstandard, wobei das Lesegerät an ein Netzwerk (116) angebunden ist, mit einem Token (106), wobei der ID-Token einen elektronischen Speicher (118) mit einem geschützten Speicherbereich (124, 162) aufweist, in dem eine Personalisierungsinformation gespeichert ist, wobei ein Zugriff auf den geschützten Speicherbereich nur über einen Prozessor (128) des ID-Tokens möglich ist, und wobei der ID-Token eine Kommunikations-Schnittstelle (108) zur Kommunikation mit dem Lesegerät nach dem ersten Datenübertragungsstandard aufweist, wobei das Secure Element einen elektronischen Speicher (118') mit einem geschützten Speicherbereich (124', 162') aufweist, wobei ein Zugriff auf den geschützten Speicherbereich nur über einen Prozessor (128') des Secure Elements möglich ist, und wobei das Secure Element eine Kommunikations-Schnittstelle (164) zur Kommunikation mit dem Lesegerät nach dem zweiten Datenübertragungsstandard aufweist,
wobei das Computersystem zur Durchführung eines Lesezugriffs zum Lesen der Personalisierungsinformation aus dem ID-Token ausgebildet ist, wobei für die Durchführung des Lesezugriffs die folgenden Schritte durchgeführt werden:
- Authentifizierung eines Nutzers (102), dem der ID-Token zugeordnet ist, gegenüber dem ID-Token,
- Authentifizierung des ID-Provider-Computersystems gegenüber dem ID-Token über das Netzwerk, wobei die Authentifizierung des ID-Provider-Computersystems gegenüber dem ID-Token mithilfe eines Zertifikats (144) des ID-Provider-Computersystems erfolgt, indem eine Leseberechtigung für einen Lesezugriff des ID-Provider-Computersystems auf die in dem geschützten Speicherbereich des ID-Tokens gespeicherte Personalisierungsinformation gespeichert ist, wobei der ID-Token die Leseberechtigung des ID-Provider-Computersystems für den Lesezugriff auf die Personalisierungsinformation mithilfe des Zertifikats überprüft,
- nach erfolgreicher Authentifizierung des Nutzers und des ID-Provider-Computersystems gegenüber dem ID-Token und nach erfolgreicher Überprüfung der Leseberechtigung, Durchführung des Lesezugriffs des ID-Provider-Computersystems auf die in dem ID-Token gespeicherte Personalisierungsinformation über das Netzwerk, wobei die Übertragung der Personalisierungsinformation von dem ID-Token zu dem ID-Provider-Computersystem über das Netzwerk mit Ende-zu-Ende-Verschlüsselung erfolgt, wobei die ID-Token-seitige Verschlüsselung (132) durch den Prozessor des ID-Tokens durchgeführt wird,
und wobei das Computersystem zur Durchführung eines Schreibzugriffs auf das Secure Element ausgebildet ist, wobei für die Durchführung des Schreibzugriffs die folgenden Schritte durchgeführt werden:
- Authentifizierung des Nutzers gegenüber dem dem Nutzer zugeordneten Secure Element,
- Authentifizierung des ID-Provider-Computersystems gegenüber dem Secure Element über das Netzwerk, wobei die Authentifizierung des ID-Provider-Computersystems gegenüber dem Secure Element mithilfe eines Zertifikats (144) des ID-Provider-Computersystems erfolgt, indem eine Schreibberechtigung für einen Schreibzugriff des ID-Provider-Computersystems auf den geschützten Speicherbereich des Secure Element zur Speicherung der Personalisierungsinformation gespeichert ist, wobei das Secure Element die Schreibberechtigung des ID-Provider-Computersystems für den Schreibzugriff mithilfe des Zertifikats überprüft,
- nach erfolgreicher Authentifizierung des Nutzers und des ID-Provider-Computersystems gegenüber dem ID-Token und nach erfolgreicher Überprüfung der Schreibberechtigung durch das Secure Element, Durchführung des Schreibzugriffs des ID-Provider-Computersystems zum Schreiben der Personalisierungsinformation in den geschützten Speicherbereich des Secure Element über das Netzwerk, wobei die Personalisierungsinformation von dem ID-Provider-Computersystem über das Netzwerk mit Ende-zu-Ende-Verschlüsselung an das Secure Element übertragen wird, wobei die Secure Element-seitige Verschlüsselung (132') durch den Prozessor des Secure Element durchgeführt wird,

14. Computersystem nach Anspruch 13, mit einem Mobilfunkgerät (168), insbesondere einem Smartphone, mit einem integrierten kontaktbehafteten Lesegerät (170) für das Secure Element, wobei das Mobilfunkgerät zum Laden eines Anwendungsprogramms ausgebildet ist, wobei die Ende-zu-Ende-Verschlüsselung (132') durch Ausführung des Anwendungsprogramms (176) durch den Prozessor des Secure Elements durchgeführt wird.

## Claims

1. A method for personalising a secure element (158) with the aid of an ID token (106), wherein the ID token has an electronic memory (118) having a protected memory area (124, 162), in which personalisation information is stored, wherein the protected memory area can be accessed only via a processor (128) of the ID token, and wherein the ID token has a communication interface (108) for communication with a reading device in accordance with a first data transmission standard, wherein the secure element has an electronic memory (118') having a protected memory area (124', 162'), wherein the protected memory area can be accessed only via a processor (128') of the secure element, and wherein the secure element has a communication interface (164) for communication with the reading device in accordance with a second data transmission standard, said method having the following steps:
a) reading the personalisation information out of the ID token by means of an ID provider computer system (136) via a network (116), wherein the following steps are performed for the reading:
- authenticating a user (102), to whom the ID token is assigned, with respect to the ID token,
- authenticating the ID provider computer system with respect to the ID token via the network, wherein the ID provider computer system is authenticated with respect to the ID token with the aid of a certificate (144) of the ID provider computer system in which a read authorisation for a read access of the ID provider computer system to the personalisation information stored in the protected memory area of the ID token is stored, wherein the ID token checks the read authorisation of the ID provider computer system for read access to the personalisation information with the aid of the certificate,
- after successful authentication of the user and of the ID provider computer system with respect to the ID token, and after the read authorisation has been successfully checked, granting the read access of the ID provider computer system to the personalisation information stored in the ID token via the network, wherein the personalisation information is transmitted from the ID token to the ID provider computer system via the network with end-to-end encryption, wherein the ID token-side encryption (132) is carried out by the processor of the ID token,
wherein the ID token is connected to the network via the reading device that implements the first and second data transmission standard,
b) writing the personalisation information read out of the ID token into the secure element by the ID provider computer system via the network, wherein the following steps are carried out for the writing of the personalisation information:
- authenticating the user with respect to the secure element assigned to the user,
- authenticating the ID provider computer system with respect to the secure element via the network, wherein the ID provider computer system is authenticated with respect to the secure element with the aid of a certificate (144) of the ID provider computer system in which a write authorisation for a write access of the ID provider computer system to the protected memory area of the secure element for storing the personalisation information is stored, wherein the secure element checks the write authorisation of the ID provider computer system for the write access with the aid of the certificate,
- after successful authentication of the user and the ID provider computer system with respect to the ID token and after the write authorisation has been successfully checked by the secure element, carrying out the write access of the ID provider computer system for writing the personalisation information into the protected memory area of the secure element via the network, wherein the personalisation information is transmitted from the ID provider computer system, via the network with end-to-end encryption, to the secure element, wherein the secure element-side encryption (132') is carried out by the processor of the secure element,
wherein the secure element is connected to the network via the reading device.

2. The method according to claim 1, wherein the reading device has a user interface and the reading device is designed to output a query signal via the user interface and to input a confirmation signal in response to the query signal by the user, wherein the query signal for authenticating the user and the ID provider computer system and the successful check of the write authorisation are generated by the reading device and output via the user interface, wherein the input of the confirmation signal is a precondition for the subsequent carrying out of the write access by the ID provider computer system, wherein the input of the confirmation signal is preferably carried out by inputting a PIN of the user, whereby the user is authenticated.

3. The method according to claim 1 or 2, wherein the personalisation information is an ID token pseudonym, in particular a restricted identifier (RID).

4. The method according to claim 1, 2 or 3, wherein the personalisation information includes one or more attributes of the user and/or of the ID token.

5. The method according to any one of the preceding claims, wherein the ID provider computer system has a read server (178) for carrying out the read access and a write server (180) for carrying out the write access, wherein the read server has a first certificate, in which the read authorisation is specified, and wherein the write server has a second certificate, in which the write authorisation is specified.

6. The method according to claim 5, wherein the personalisation information read by the read server from the ID token is signed by the read server and is transmitted to a service computer system (150) via the network, and the personalisation information is transmitted from the service computer system via the network to the write server, which carries out the write access in order to write the personalisation information into the secure element.

7. The method according to claim 6, wherein a network connection is established between a user computer system and the service computer system, via which network connection a personalisation request for personalisation of the secure element is transmitted to the service computer system, whereupon the service computer system generates a first SAML request, in which the personalisation information to be read out is specified, and the service computer system transmits the first SAML request via the network to the read server, wherein the read server transmits the personalisation information read out thereupon to the service computer system in the form of an SAML object, whereupon the service computer system generates a second SAML request, which includes the read-out personalisation information, in order to specify the subsequent write access of the write server, wherein the second SAML request is transmitted from the service computer system via the network to the write server.

8. The method according to claim 7, wherein the service computer system, after receiving the SAML object via the network, transmits a request signal to the user computer system in order to prompt the user to bring the secure element into the range of the reading device.

9. The method according to any one of the preceding claims, wherein the ID token is a document of value or a security document, in particular an identification document, that is to say an ID document, in particular an electronic personal identification document, passport, a driver's licence, an employee identification card, or a payment means, such as a banknote, a credit card, or any other type of authorisation, such as an admission card, a consignment note, or a visa, in particular a chip card, in particular having an RFID and/or NFC interface.

10. The method according to any one of the preceding claims, wherein the secure element is a micro SD card with integrated NFC antenna.

11. The method according to any one of the preceding claims, wherein before personalisation the secure element is transferred from a first-use status into a used status in order to permit the authentication of the user with respect to the secure element as a precondition for write access.

12. The method according to any one of the preceding claims, wherein the end-to-end encryption (132') is carried out by the processor of the secure element executing an application program (176), wherein, before the personalisation is carried out, the application program is loaded from an application server (174) with the aid of a mobile radio device (168) via the network, wherein the mobile radio device has a communication interface (170) for communication via a communication interface (166) of the secure element.

13. A computer system comprising an ID provider computer system (136), a reading device having communication interfaces (104, 105) for communication according to a first or a second data transmission standard, wherein the reading device is connected to a network (116), comprising an ID token (106), wherein the ID token has an electronic memory (118) having a protected memory area (124, 162) in which personalisation information is stored, wherein access to the protected memory area is possible only via a processor (128) of the ID token, and wherein the ID token has a communication interface (108) for communication with the reading device according to the first data transmission standard, wherein the secure element has an electronic memory (118') having a protected memory area (124', 162'), wherein access to the protected memory area is possible only via a processor (128') of the secure element, and wherein the secure element has a communication interface (164) for communication with the reading device according to the second data transmission standard,
wherein the computer system is designed to carry out a read access to read the personalisation information out of the ID token, wherein the following steps are performed for carrying out the read access:
- authenticating a user (102), to whom the ID token is assigned, with respect to the ID token,
- authenticating the ID provider computer system with respect to the ID token via the network, wherein the ID provider computer system is authenticated with respect to the ID token with the aid of a certificate (144) of the ID provider computer system in which a read authorisation for a read access of the ID provider computer system to the personalisation information stored in the protected memory area of the ID token is stored, wherein the ID token checks the read authorisation of the ID provider computer system for read access to the personalisation information with the aid of the certificate,
- after successful authentication of the user and of the ID provider computer system with respect to the ID token, and after the read authorisation has been successfully checked, granting the read access of the ID provider computer system to the personalisation information stored in the ID token via the network, wherein the personalisation information is transmitted from the ID token to the ID provider computer system via the network with end-to-end encryption, wherein the ID token-side encryption (132) is carried out by the processor of the ID token,
and wherein the computer system is designed to carry out a write access to the secure element, wherein the following steps are performed for carrying out the write access:
- authenticating the user with respect to the secure element assigned to the user,
- authenticating the ID provider computer system with respect to the secure element via the network, wherein the ID provider computer system is authenticated with respect to the secure element with the aid of a certificate (144) of the ID provider computer system in which a write authorisation for a write access of the ID provider computer system to the protected memory area of the secure element for storing the personalisation information is stored, wherein the secure element checks the write authorisation of the ID provider computer system for the write access with the aid of the certificate,
- after successful authentication of the user and the ID provider computer system with respect to the ID token and after the write authorisation has been successfully checked by the secure element, carrying out the write access of the ID provider computer system for writing the personalisation information into the protected memory area of the secure element via the network, wherein the personalisation information is transmitted from the ID provider computer system, via the network with end-to-end encryption, to the secure element, wherein the secure element-side encryption (132') is carried out by the processor of the secure element,

14. The computer system according to claim 13, comprising a mobile radio device (168), in particular a smartphone, comprising an integrated contact-based reading device (170) for the secure element, wherein the mobile radio device is designed to load an application program, wherein the end-to-end encryption (132') is carried out by the processor of the secure element executing the application program (176).

## Revendications

1. Procédé destiné à la personnalisation d'un élément de sécurité (158) à l'aide d'un jeton d'identification (106), dans lequel le jeton d'identité présente une mémoire électronique (118) avec une zone de mémoire protégée (124, 162), dans laquelle une information de personnalisation est stockée, où un accès à la zone de mémoire protégée n'est possible que par le biais d'un processeur (128) du jeton d'identification, et où le jeton d'identification présente une interface de communication (108) pour la communication avec un lecteur selon une première norme de transmission de données, où l'élément de sécurité présente une mémoire électronique (118) dotée d'une zone de mémoire protégée (124', 162'), où un accès à la zone de mémoire protégée n'est possible que par le biais d'un processeur (128') de l'élément de sécurité, et où l'élément de sécurité présente une interface de communication (164) destinée à la communication avec le lecteur selon une deuxième norme de transmission de données, avec les étapes suivantes :
a) la lecture de l'information de personnalisation à partir du jeton d'identification par un système informatique de fournisseur d'identification (136) par le biais d'un réseau (116), où les étapes suivantes sont exécutées pour la lecture :
- l'authentification d'un utilisateur (102) qui est associé au jeton d'identification vis-à-vis du jeton d'identification,
- l'authentification du système informatique de fournisseur d'identification vis-à-vis du jeton d'identification par le biais du réseau, où l'authentification du système informatique de fournisseur d'identification vis-à-vis du jeton d'identification a lieu à l'aide du certificat (144) du système informatique de fournisseur d'identification en ce qu'une autorisation de lecture est stockée pour un accès en lecture du système informatique de fournisseur d'identification à l'information de personnalisation stockée dans la zone de mémoire protégée du jeton d'identification, où le jeton d'identification vérifie l'autorisation de lecture du système informatique de fournisseur d'identification pour l'accès en lecture à l'information de personnalisation à l'aide du certificat,
- après une authentification réussie de l'utilisateur et du système informatique de fournisseur d'identification vis-à-vis du jeton d'identification et après une vérification réussie de l'autorisation de lecture, l'exécution de l'accès en lecture du système informatique de fournisseur d'identification à l'information de personnalisation stockée dans le jeton d'identification par le biais du réseau, où la transmission de l'information de personnalisation a lieu du jeton d'identification vers le système informatique de fournisseur d'identification par le biais du réseau avec un chiffrement de bout en bout, où le chiffrement (132) du côté du jeton d'identification est exécuté par le processeur du jeton d'identification,
où le jeton d'identification est rattaché au réseau par le biais du lecteur, lequel met en oeuvre les première et deuxième normes de transmission de données,
b) l'écriture de l'information de personnalisation lue à partir du jeton d'identification par le biais du réseau dans l'élément de sécurité par le système informatique de fournisseur d'identité, où les étapes suivantes sont exécutées pour l'écriture de l'information de personnalisation :
- l'authentification de l'utilisateur vis-à-vis de l'élément de sécurité associé à l'utilisateur,
- l'authentification du système informatique de fournisseur d'identification vis-à-vis de l'élément de sécurité par le biais du réseau, où l'authentification du système informatique de fournisseur d'identification vis-à-vis de l'élément de sécurité a lieu à l'aide d'un certificat (144) du système informatique de fournisseur d'identification en ce qu'une autorisation d'écriture pour un accès en écriture du système informatique de fournisseur d'identification à la zone de mémoire protégée de l'élément de sécurité est stocké pour le stockage de l'information de personnalisation, où l'élément de sécurité vérifie l'autorisation d'écriture du système informatique de fournisseur d'identification pour l'accès en écriture à l'aide du certificat,
- après l'authentification réussie de l'utilisateur et du système informatique de fournisseur d'identification vis-à-vis du jeton d'identification et après la vérification de l'autorisation en écriture par l'élément de sécurité, l'exécution de l'accès en écriture du système informatique de fournisseur d'identification pour l'écriture de l'information de personnalisation dans la zone de mémoire protégée de l'élément de sécurité par le biais du réseau, où l'information de personnalisation est transmise du système informatique de fournisseur d'identification à l'élément de sécurité par le biais du réseau avec un chiffrement de bout en bout, où le chiffrement (132') du côté de l'élément de sécurité est exécuté par le processeur de l'élément de sécurité,
où l'élément de sécurité est rattaché au réseau par le biais du lecteur.

2. Procédé selon la revendication 1, dans lequel le lecteur présente une interface d'utilisateur, et le lecteur est conçu pour l'émission d'un signal de questionnement par le biais de l'interface d'utilisateur ainsi que pour la saisie d'un signal de confirmation suite au signal de questionnement par l'utilisateur, où le signal de questionnement est généré par le lecteur pour l'authentification de l'utilisateur et du système informatique de fournisseur d'identification ainsi que pour la vérification réussie de l'autorisation en écriture et est émis par le biais de l'interface d'utilisateur, où la saisie du signal de confirmation est une condition nécessaire pour l'exécution concomitante de l'accès en écriture par le système informatique de fournisseur d'identification, où la saisie du signal de confirmation a lieu de préférence par la saisie d'un code PIN de l'utilisateur, ce par quoi l'utilisateur est authentifié.

3. Procédé selon la revendication 1 ou 2, dans lequel, dans le cas de l'information de personnalisation, il s'agit d'un pseudonyme de jeton d'identification, notamment d'un identificateur restreint (RID).

4. Procédé selon la revendication 1, 2, ou 3, dans lequel l'information de personnalisation contient un ou plusieurs attributs de l'utilisateur et/ou du jeton d'identification.

5. Procédé selon l'une des revendications précédentes, dans lequel le système informatique de fournisseur d'identification présente un serveur de lecteur (178) destiné à l'exécution de l'accès en lecture et un serveur d'écriture (180) pour l'exécution de l'accès en écriture, où le serveur de lecture a un premier certificat dans lequel l'autorisation de lecture est spécifiée, et où le serveur d'écriture a un deuxième certificat dans lequel l'autorisation en écriture est spécifiée.

6. Procédé selon la revendication 5, dans lequel l'information de personnalisation lue à partir du jeton d'identification par le serveur de lecture est signée par le serveur de lecture et est transmise à un système informatique de services (150) par le biais du réseau, et l'information de personnalisation est transmise par le biais du réseau du système informatique de services au serveur d'écriture, lequel exécute l'accès en écriture afin d'écrire l'information de personnalisation dans l'élément de sécurité.

7. Procédé selon la revendication 6, dans lequel une connexion par réseau est établie entre un système informatique d'utilisateur et le système informatique de services, par le biais de laquelle une demande de personnalisation est transmise pour la personnalisation de l'élément de sécurité, à la suite de quoi le système informatique génère une première requête SAML dans laquelle l'information de personnalisation à lire est spécifiée et le système informatique de services transmet la première requête SAML au serveur de lecture par le biais du réseau, où, à la suite de quoi, le serveur de lecture transmet l'information de personnalisation lue sous forme d'un objet SAML au système informatique de service, à la suite de quoi, le système informatique de service génère une deuxième requête SAML qui contient l'information de personnalisation lue afin de spécifier l'accès en écriture ultérieur du serveur d'écriture, où la deuxième requête SAML est transmise du système informatique au serveur d'écriture par le biais du réseau.

8. Procédé selon la revendication 7, dans lequel le système informatique de service, après la réception de l'objet SAML par le biais du réseau, transmet un signal de demande au système informatique d'utilisateur par le biais du réseau afin de demander à l'utilisateur de mettre l'élément de sécurité à la portée du lecteur.

9. Procédé selon l'une des revendications précédentes, dans lequel, dans le cas du jeton d'identification, il s'agit d'un document de valeur ou de sécurité, notamment d'un document d'identité, ceci signifie un document ID, notamment, une carte d'identité personnelle électronique, un passeport, un permis de conduire, une carte d'entreprise ou un moyen de paiement, comme, par exemple, un billet de banque, une carte de crédit ou une autre carte d'habilitation, comme, par exemple, une carte d'entrée, une lettre de transport ou un visa, notamment, une carte à puce, notamment dotée d'une interface RFID et/ou NFC.

10. Procédé selon l'une des revendications précédentes, dans lequel, dans le cas de l'élément de sécurité, il s'agit d'une carte micro-SD avec une antenne NFC intégrée.

11. Procédé selon l'une des revendications précédentes, dans lequel l'élément de sécurité est transféré d'un état de première utilisation dans un état d'utilisation avant la personnalisation, afin de permettre l'authentification de l'utilisateur vis-à-vis de l'élément de sécurité en tant que condition nécessaire pour l'accès en écriture.

12. Procédé selon l'une des revendications précédentes, dans lequel le chiffrement de bout en bout (132) est exécuté par l'exécution d'un programme d'application (176) par le processeur de l'élément de sécurité, où le programme d'application est chargé avant l'exécution de la personnalisation à l'aide d'un appareil radio mobile (108) par le biais du réseau par un serveur d'application (174), où l'appareil radio mobile présente une interface de communication (170) pour la communication par le biais d'une interface de communication (166) de l'élément de sécurité.

13. Système informatique avec un système informatique de fournisseur d'identification (136), avec un lecteur doté d'interfaces de communication (104, 105) pour la communication selon une première, respectivement, une deuxième norme de transmission de données, où le lecteur est rattaché à un réseau (116), avec un jeton (106), où le jeton d'identification présente une mémoire électronique (118) avec une zone de mémoire protégée (124, 162), dans laquelle une information de personnalisation est stockée, où un accès à la zone de mémoire protégée n'est possible que par le biais d'un processeur (128) du jeton d'identification, et où le jeton d'identification présente une interface de communication (108) pour la communication avec un lecteur selon la première norme de transmission de données, où l'élément de sécurité présente une mémoire électronique (118') avec une zone de mémoire protégée (124', 162'), où un accès à la zone de mémoire protégée n'est possible que par le biais d'un processeur (128') de l'élément de sécurité, et où l'élément de sécurité présente une interface de communication (164) pour la communication avec le lecteur selon la deuxième norme de transmission de données,
où le système informatique est conçu pour l'exécution d'un accès en lecture pour la lecture de l'information à partir du jeton d'identification, où, pour l'exécution de l'accès en lecture, les étapes suivantes sont effectuées :
- l'authentification d'un utilisateur (102) qui est associé au jeton d'identification, vis-à-vis du jeton d'identification,
- l'authentification du système informatique de fournisseur d'identification vis-à-vis du jeton d'identification par le biais du réseau, où l'authentification du système informatique de fournisseur d'identification vis-à-vis de l'élément de sécurité a lieu à l'aide d'un certificat (144) du système informatique de fournisseur d'identification en ce qu'une autorisation de lecture pour un accès en lecture du système informatique de fournisseur d'identification à la zone de mémoire protégée du jeton d'identification est stocké, où le jeton d'identification vérifie l'autorisation de lecture du système informatique de fournisseur d'identification pour l'accès en lecture à l'aide du certificat,
- après l'authentification réussie de l'utilisateur et du système informatique de fournisseur d'identification vis-à-vis du jeton d'identification et après la vérification de l'autorisation en lecture, l'exécution de l'accès en lecture du système informatique de fournisseur d'identification à l'information de personnalisation stockée dans le jeton d'identification par le biais du réseau, où la transmission de l'information de personnalisation du jeton d'identification vers le système informatique de fournisseur d'identification a lieu par le biais du réseau avec un chiffrement de bout en bout, où le chiffrement (132) du côté du jeton d'identification est exécuté par le processeur du jeton d'identification,
et où le système informatique est conçu pour l'exécution d'un accès en écriture de l'élément de sécurité, où, pour l'exécution de l'accès en écriture les étapes suivantes sont exécutées :
- l'authentification de l'utilisateur vis-à-vis de l'élément de sécurité associé à l'utilisateur,
- l'authentification du système informatique de fournisseur d'identification vis-à-vis de l'élément de sécurité par le biais du réseau, où l'authentification du système informatique de fournisseur d'identification vis-à-vis de l'élément de sécurité a lieu à l'aide d'un certificat (144) du système informatique de fournisseur d'identification en ce qu'une autorisation d'écriture pour un accès en écriture du système informatique de fournisseur d'identification à la zone de mémoire protégée de l'élément de sécurité est stocké pour le stockage de l'information de personnalisation, où l'élément de sécurité vérifie l'autorisation d'écriture du système informatique de fournisseur d'identification pour l'accès en écriture à l'aide du certificat,
- après l'authentification réussie de l'utilisateur et du système informatique de fournisseur d'identification vis-à-vis du jeton d'identification et après la vérification réussie de l'autorisation en écriture par l'élément de sécurité, l'exécution de l'accès en écriture du système informatique de fournisseur d'identification pour l'écriture de l'information de personnalisation dans la zone de mémoire protégée de l'élément de sécurité par le biais du réseau, où l'information de personnalisation est transmise du système informatique de fournisseur d'identification à l'élément de sécurité par le biais du réseau avec un chiffrement de bout en bout, où le chiffrement (132') du côté de l'élément de sécurité est exécuté par le processeur de l'élément de sécurité.

14. Système informatique selon la revendication 13, avec un appareil radio mobile (168), notamment, un smartphone, avec un lecteur (170) à réaction par contact intégré pour l'élément de sécurité, où l'appareil radio mobile est conçu pour la charge d'un programme d'application, où le chiffrement de bout en bout (132') est exécuté par l'exécution du programme d'application (176) par le processeur de l'élément de sécurité.
